# EUROPÄISCHE PATENTSCHRIFT

(11) **EP 3 402 691 B1**
(45) Veröffentlichungstag und Bekanntmachung des Hinweises auf die Patenterteilung: **24.02.2021**
(21) Anmeldenummer: 16790917.5
(22) Anmeldetag: 26.10.2016
(51) Int. Cl.: B60L 53/24

(54) **ELEKTROSYSTEM FÜR EIN FAHRZEUG, FAHRZEUG SOWIE VERFAHREN ZUM DURCHFÜHREN EINES LADEVORGANGS**
ELECTRICAL SYSTEM FOR A VEHICLE, VEHICLE AND METHOD FOR CARRYING OUT A CHARGING PROCESS
SYSTÈME ÉLECTRIQUE POUR VÉHICULE, VÉHICULE ET PROCÉDÉ PERMETTANT DE METTRE EN UVRE UNE OPÉRATION DE CHARGE

(30) Priorität: 11.01.2016 DE 102016100358
(43) Veröffentlichungstag der Anmeldung: 21.11.2018
(73) Patentinhaber: Volkswagen Aktiengesellschaft, 38440 Wolfsburg (DE)
(72) Erfinder: KAUFHOLD, Christoph, 38118 Braunschweig (DE); PLIKAT, Robert, 29369 Ummern (DE)
(74) Vertreter: Patentanwälte Bals & Vogel
(86) Internationale Anmeldenummer: PCT/EP2016/075793
(87) Internationale Veröffentlichungsnummer: WO 2017/121509

(56) Entgegenhaltungen:
- WO-A1-2011/151131
- WO-A1-2011/151131
- DE-A1- 10 347 427
- DE-A1- 10 347 427
- DE-A1-102009 020 504
- DE-A1-102009 020 504
- DE-A1-102009 033 955
- DE-A1-102009 033 955
- DE-A1-102010 002 318
- DE-A1-102010 002 318
- DE-A1-102010 027 719
- DE-A1-102010 027 719
- DE-A1-102010 040 972
- DE-A1-102010 040 972
- DE-T2- 69 303 150
- DE-T2- 69 303 150
- US-A1- 2010 102 628
- US-A1- 2010 102 628
- US-A1- 2011 187 185
- US-A1- 2011 187 185
- Alamy Limited: "Port und motorischen Einheit eines Elektroautos aufladen Stockfotografie - Alamy", , 15 August 2015 (2015-08-15), XP055703911, Retrieved from the Internet: URL:https://www.alamy.de/stockfoto-port-un d-motorischen-einheit-eines-elektroautos-a ufladen-86452519.html?pv=1&stamp=2&imageid =B5998F32-F02E-4F78-92F2-90998686DB1B&p=23 4234&n=0&orientation=0&pn=1&searchtype=0&I sFromSearch=1&srch=foo=bar&st=0&pn=1&ps=10 0&sortby=2&resultview=sortbyPopular&npgs=0 &qt=car%20 [retrieved on 2020-06-11]

## Beschreibung

Die vorliegende Erfindung betrifft ein Elektrosystem für ein Fahrzeug, aufweisend eine Drehstrommaschine, einen Stromrichter und eine Gleichstrombatterie. Ferner betrifft die Erfindung ein Fahrzeug mit einem derartigen Elektrosystem sowie ein Verfahren zum Durchführen eines Ladevorgangs zwischen einem Elektrosystem eines Fahrzeugs und einer externen Drehstromquelle.

Elektromobilität ist ein wichtiges Forschungsgebiet der modernen Fahrzeugtechnik. Neben den dafür nötigen Antrieben, die oftmals als Drehstrommaschinen ausgebildet sind, muss dabei auch eine Versorgung dieser Antriebe mit elektrischer Energie sichergestellt sein. Eine Möglichkeit hierfür sind Batterien, die zum Speichern von elektrischer Energie ausgebildet sind. Gleichstrombatterien haben sich dabei als besonders geeignet erwiesen, große Mengen an elektrischer Energie zu speichern. Für die nötige Umwandlung zwischen Gleich- und Drehstrom werden in modernen Fahrzeugen Stromrichter eingesetzt, die in einer elektrisch leitenden Verbindung zwischen der Gleichstrombatterie und der Drehstrommaschine angeordnet sind und zu einem Antreiben der als Motor betriebenen Drehstrommaschine Gleich- in Drehstrom umwandeln. Bei einem Rekuperationsbetrieb, bei der mechanische Energie durch die Drehstrommaschine, die dann als Generator betrieben wird, in elektrische Energie in der Form von Drehstrom umgewandelt wird, wird durch den Stromrichter dieser Drehstrom in Gleichstrom umgewandelt und damit die Gleichstrombatterie aufgeladen.

Ferner ist es bekannt, diese Gleichstrombatterien extern aufzuladen, um große Mengen an elektrischer Energie in ihnen zu speichern und somit für elektrisch angetriebene Fahrzeuge eine hohe Reichweite bereitstellen zu können. Dabei ist es bekannt, Ladestationen einzusetzen, die großen Gleichstrom bereitstellen können und dadurch eine hohe Ladeleistung ermöglichen. Diese Ladestationen sind jedoch sehr kostenintensiv, zumeist fest installiert und daher nur an wenigen Orten verfügbar. Alternativ kann ein Ladegerät vorgesehen sein, das in das Fahrzeug integriert ist und das zum Umwandeln des von Standard-Steckdosen gelieferten Wechselstroms in Gleichstrom zum Laden der Gleichstrombatterie ausgebildet ist. Dieser Wechselstrom weist zumeist eine Spannung von 230V mit einem maximalen Strom von 16A auf. Eine mögliche erreichbare Ladeleistung ist durch die Eigenschaften des einphasigen Wechselstroms auf etwa 3,5kW beschränkt. Dies führt zu langen Ladezeiten. Auch stellen integrierte Ladegeräte zusätzliche Bauteile für die Fahrzeuge dar. Dies wirkt sich bei diesen Fahrzeugen zumeist nachteilig auf Herstellungskosten, Gewicht und/oder benötigten Bauraum aus.

Um die Nachteile dieser integrierten Ladegeräte zumindest teilweise zu beheben, ist es bekannt, bereits im Fahrzeug vorhandene Komponenten, insbesondere einen Stromrichter und eine Drehstrommaschine, auch bei einem Aufladen der Gleichstrombatterie zu nutzen. Allerdings kann dabei auf zusätzliche Bauteile jeweils jedoch nicht komplett verzichtet werden. So wird beispielsweise gemäß der DE 10 2010 039 886 A1 ein weiterer zusätzlicher Stromrichter benötigt, um mit dem vorhandenen Stromrichter und der Drehstrommaschine ein Laden der Gleichstrombatterie zu ermöglichen. In der DE 10 2009 021 797 A1 sowie der DE 10 2010 039 886 A1 werden die Spulen der Drehstrommaschine als Drosseln zum Filtern und Glätten eines Ladestrom eingesetzt, wobei dieser Ladestrom jeweils ein Gleichstrom ist, der durch einen zusätzlich benötigten Gleichrichter erzeugt wird. Durch diese jeweils zusätzlich benötigten Bauteile kann eine Einsparung an Gewicht und/oder Bauraum und/oder eine Senkung der Herstellungskosten somit nur teilweise erreicht werden

US 2011/187185 A1 zeigt ein Antriebssystem eines elektrischen Fahrzeugs mit einer Sternbrücke, die beim Laden abgezogen werden muss. DE 10 2009 033955 A1 zeigt ebenfalls ein Antriebssystem, bei dem die Maschinenleiter bei gestecktem Ladestecker durch Schalter aufgetrennt und mit den Kontakten des Ladesteckers verbunden werden.

Es ist daher Aufgabe der vorliegenden Erfindung, die voranstehend beschriebenen Nachteile zumindest teilweise zu beheben. Insbesondere ist es Aufgabe der Erfindung, ein Elektrosystem für ein Fahrzeug, ein Fahrzeug mit einem Elektrosystem sowie ein Verfahren zum Durchführen eines Ladevorgangs zwischen einem Elektrosystem eines Fahrzeugs und einer externen Drehstromquelle bereitzustellen, die in besonders einfacher und kostengünstiger Weise einen Ladevorgang einer Gleichstrombatterie eines Fahrzeugs verbessern, wobei insbesondere eine Verwendung eines Drehstroms für diesen Ladevorgang ermöglicht werden kann.

Voranstehende Aufgabe wird gelöst durch ein Elektrosystem für ein Fahrzeug mit den Merkmalen des unabhängigen Anspruchs 1. Ferner wird die Aufgabe gelöst durch ein Fahrzeug mit einem Elektrosystem mit den Merkmalen des nebengeordneten Anspruchs 5 sowie durch ein Verfahren zum Durchführen eines Ladevorgangs zwischen einem Elektrosystem eines Fahrzeugs und einer externen Drehstromquelle mit den Merkmalen des nebengeordneten Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Elektrosystem beschrieben sind, selbstverständlich auch im Zusammenhang mit dem erfindungsgemäßen Fahrzeug sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch ein Elektrosystem für ein Fahrzeug, aufweisend eine Drehstrommaschine, einen Stromrichter und eine Gleichstrombatterie, wobei die Drehstrommaschine über den Stromrichter mit der Gleichstrombatterie elektrisch leitend verbunden ist, wobei die Drehstrommaschine mit Drehstrom betreibbar ist und einen elektrischen Sternpunkt und Maschinenleiter für die einzelnen Phasen des Drehstroms aufweist, wobei im Sternpunkt die Maschinenleiter zusammengeführt sind, wobei ferner die Gleichstrombatterie Gleichstrom speichert und abgibt und wobei der Stromrichter eine elektrische Umwandlung zwischen den Stromarten vornimmt. Ein erfindungsgemäßes Elektrosystem ist dadurch gekennzeichnet, dass die Drehstrommaschine eine Auftrennvorrichtung zum Auftrennen des Sternpunkts aufweist, wobei bei aufgetrenntem Sternpunkt die einzelnen Maschinenleiter voneinander elektrisch getrennt sind und wobei die Auftrennvorrichtung ferner eine Anordnungsvorrichtung zum Anordnen von Ladeleitern eines Ladesteckers einer externen Drehstromquelle in elektrisch leitender Verbindung zu den Maschinenleitern der Drehstrommaschine aufweist.

Ein erfindungsgemäßes Elektrosystem weist eine Drehstrommaschine, einen Stromrichter und eine Gleichstrombatterie auf. Dies sind wesentliche Bauteile, die für einen elektrischen Antrieb des Fahrzeugs, in dem das Elektrosystem angeordnet ist, notwendig sind. Die Bauteile sind elektrisch leitend miteinander verbunden, wobei der Stromrichter zwischen der Gleichstrombatterie und der Drehstrommaschine angeordnet ist. Dies ist erforderlich, um den von der Gleichstrombatterie benötigten Gleichstrom in einen von der Drehstrommaschine benötigten Drehstrom umzuwandeln, wobei diese Umwandlung durch den Stromrichter in beide Richtungen vorgenommen werden kann. Der Stromrichter ist daher bevorzugt als ein bidirektionaler Stromrichter ausgebildet. Der Drehstrom ist dabei bevorzugt dreiphasig ausgebildet. In der Drehstrommaschine sind dabei Maschinenleiter vorgesehen, jeweils bevorzugt einer für jede Phase. Diese Maschinenleiter sind auf bekannte Weise in einem Sternpunkt zusammengeführt.

Erfindungsgemäß ist vorgesehen, dass die Drehstrommaschine eine Auftrennvorrichtung aufweist. Durch diese Auftrennvorrichtung kann ermöglicht werden, den Zusammenschluss der Maschinenleiter im Sternpunkt aufzutrennen. Insbesondere sind durch das Auftrennen des Sternpunkts durch die Auftrennvorrichtung die Maschinenleiter voneinander elektrisch getrennt. Bevorzugt sind die einzelnen Maschinenleiter dabei bei aufgetrenntem Sternpunkt direkt zugänglich, insbesondere von außerhalb der Drehstrommaschine zugänglich. Insbesondere weist ferner die Auftrennvorrichtung dafür eine Anordnungsvorrichtung auf, durch die ein Anordnen eines Ladesteckers an der Auftrennvorrichtung ermöglicht werden kann. Der Ladestecker ist dabei Teil einer externen Drehstromquelle, die zum Bereitstellen eines Drehstroms ausgebildet ist. Der Drehstrom der Drehstromquelle weist bevorzugt dieselbe Anzahl an Phasen wie der Drehstrom, der in der Drehstrommaschine des erfindungsgemäßen Elektrosystems verwendet wird, besonders bevorzugt ebenfalls drei Phasen.

Für jede der Phasen des Drehstroms der Drehstromquelle kann bevorzugt wiederum im Ladestecker ein Ladeleiter vorgesehen sein. Erfindungswesentlich ist vorgesehen, dass die Anordnungsvorrichtung der Auftrennvorrichtung derart ausgebildet und/oder an einen Ladestecker angepasst ist, dass, wenn ein Ladestecker der Drehstromquelle in der Anordnungsvorrichtung angeordnet ist, jeweils ein Maschinenleiter mit einem der Ladeleiter elektrisch leitend verbunden ist. Dadurch kann erreicht werden, dass Strom jeder Phase des Drehstroms der Drehstromquelle durch einen Maschinenleiter in das erfindungsgemäße Elektrosystem eingeleitet werden kann. Elektrisch entspricht dies dem Zustand eines Rekuperationsbetriebs, bei dem mechanische Energie durch die Drehstrommaschine, die dann als Generator betrieben wird, in elektrische Energie in der Form von Drehstrom umgewandelt wird. Somit kann der Stromrichter analog dazu auch den in das erfindungsgemäße Elektrosystem aus der externen Drehstromquelle eingeleiteten Drehstrom in Gleichstrom umwandeln, um mit diesem Gleichstrom die Gleichstrombatterie zu laden. Aufwändige zusätzliche Bauteile, wie beispielsweise Relais, zusätzliche Strom- und/oder Gleichrichter oder Transformatoren, sind somit nicht nötig. Dabei kann grundsätzlich neben einem Drehstrom auch ein einphasiger Wechselstrom verwendet werden, um bei einem erfindungsgemäßen Elektrosystem die Gleichstrombatterie zu laden. Hierbei werden nur zwei der drei Maschinenleiter verwendet, um den einphasigen Wechselstrom in Gleichstrom umzuwandeln.

Zusammenfassend kann somit durch ein erfindungsgemäßes Elektrosystem ein Laden einer Gleichstrombatterie des Elektrosystems an einer Drehstromquelle besonders einfach und kostengünstig ermöglicht werden. Insbesondere kann durch die Einsparung von zusätzlichen Bauteilen eine Gewichts- und Herstellungskostenreduktion sowie eine Einsparung an benötigtem Bauraum erreicht werden. Durch die Verwendung von Drehstrom kann darüber hinaus eine, besonders im Vergleich zu herkömmlichen einphasigen Wechselstrom, höhere Ladeleistung ermöglicht werden, wodurch insbesondere eine für das Laden der Gleichstrombatterie nötige Zeit verkürzt werden kann. Dies wird insbesondere auch dadurch ermöglicht, da der im erfindungsgemäßen Elektrosystem eingesetzte Stromwandler für hohe Leistungen ausgelegt sein muss, da diese Auslegung für einen Fahrbetrieb, sowohl für ein Antreiben als auch für ein Rekuperieren, zumeist ebenfalls erforderlich ist.

Ferner kann bei einem erfindungsgemäßen Elektrosystem vorgesehen sein, dass in der elektrisch leitenden Verbindung zwischen dem Stromrichter und der Gleichstrombatterie ein Gleichspannungswandler angeordnet ist. Durch einen derartigen Gleichspannungswandler kann ein Spannungsniveau einer Gleichspannung angepasst und verändert werden. Der im erfindungsgemäßen Elektrosystem verwendete Drehstrom und der Drehstrom, der von der Drehstromquelle bereitgestellt wird, können unterschiedliche Spannungsniveaus aufweisen. Somit wird auch ein Gleichstrom, der durch den Stromrichter aus Drehstrom erzeugt wird, unterschiedliche Spannungen aufweisen. Durch einen Gleichspannungswandler, der in der elektrisch leitenden Verbindung zwischen dem Stromrichter und der Gleichstrombatterie angeordnet ist, kann dies berücksichtigt werden. Auf diese Weise kann die Gleichstrombatterie zu jeder Zeit mit einem Gleichstrom mit einer für die Gleichstrombatterie passenden Spannung versorgt werden. Dies ist insbesondere daher vorteilhaft, da ein sicheres Betreiben und Umwandeln des Drehstroms durch den Stromrichter zumeist nur oberhalb eines minimalen Spannungsniveaus möglich ist. Bei beispielsweise einer Verwendung des in Europa vorhandenen Drehstromnetzes liegt dieses minimale Spannungsniveau bei etwa 620V. Ohne einen Gleichspannungswandler könnten somit in diesem Fall nur Gleichstrombatterien mit einer minimalen Spannung von 620V verwendet werden. Durch den Einsatz eines Gleichspannungswandlers kann diese Einschränkung behoben werden, so dass beispielsweise auch eine Gleichstrombatterie mit einer niedrigeren Minimalspannung, zum Beispiel 300V, verwendet werden kann.

Auch kann ein erfindungsgemäßes Elektrosystem dahingehend ausgebildet sein, dass der Stromrichter Leistungshalbleiterschalter für die Umwandlung zwischen den Stromarten aufweist, wobei eine Spannungsklasse der Leistungshalbleiterschalter zumindest der externen Drehstromquelle angepasst gewählt ist, insbesondere größer als 1000V, bevorzugt 1200V, gewählt ist. Leistungshalbleiterschalter sind besonders geeignete elektrische Bauteile, um in einem Stromrichter eine Umwandlung zwischen Stromarten vornehmen zu können. Diese Leistungshalbleiterschalter sind dabei in Spannungsklassen eingeteilt, wobei die Spannungsklassen eine maximale Spannung angeben, bei denen die Leistungshalbleiterschalter noch betrieben werden können, ohne Schaden zu nehmen. Durch eine Wahl von Leistungshalbeiterschaltern, deren Spannungsklasse an die externe Drehstromquelle angepasst gewählt ist, kann somit sichergestellt werden, dass bei einem Ladevorgang an der externen Drehstromquelle, wie er durch ein erfindungsgemäßes Elektrosystem ermöglicht werden kann, die Leistungshalbleiterschalter nicht beschädigt werden. Beispielsweise können bei einer üblichen Drehstromquelle maximale Spannungen von etwa 620V auftreten. Um mögliche Spannungsspitzen ebenfalls abzusichern, ist es besonders vorteilhaft, Leistungshalbleiterschalter einer Spannungsklasse von über 1000V, bevorzugt von 1200V, einzusetzen.

Besonders bevorzugt kann bei einem erfindungsgemäßen Elektrosystem vorgesehen sein, dass die Auftrennvorrichtung zumindest teilweise in ein Verschlusselement derart integriert ist, dass der Sternpunkt der Drehstrommaschine bei geschlossenem Verschlusselement geschlossen ist und bei geöffnetem oder entferntem Verschlusselement aufgetrennt ist. Auf diese Weise kann ein Auftrennen des Sternpunkts besonders einfach bereitgestellt werden. So muss zum Auftrennen des Sternpunkts, das heißt zum wechselseitigen elektrischen Trennen aller Maschinenleiter, nur das Verschlusselement bewegt werden. Beispielsweise kann dabei der Sternpunkt in einer Sternbrücke enthalten sein, die bevorzugt vollständig im Verschlusselement angeordnet ist. Auch kann dadurch beispielsweise eine Öffnung zugänglich werden, in der insbesondere bevorzugt die Anordnungsvorrichtung angeordnet ist.

Gemäß einem zweiten Aspekt wird die Aufgabe gelöst durch ein Fahrzeug mit einem Elektrosystem. Ein erfindungsgemäßes Fahrzeug ist dadurch gekennzeichnet, dass das Elektrosystem gemäß dem ersten Aspekt der Erfindung ausgebildet ist. Dementsprechend bringt ein erfindungsgemäßes Fahrzeug die gleichen Vorteile mit sich, wie sie ausführlich mit Bezug auf ein erfindungsgemäßes Elektrosystem gemäß dem ersten Aspekt der Erfindung erläutert worden sind.

Ferner kann bei einem erfindungsgemäßen Fahrzeug vorgesehen sein, dass die Auftrennvorrichtung des Elektrosystems zumindest teilweise in ein Verschlusselement derart integriert ist, dass der Sternpunkt der Drehstrommaschine bei geschlossenem Verschlusselement geschlossen ist und bei geöffnetem oder entferntem Verschlusselement aufgetrennt ist und dass das Verschlusselement eine Klappe, insbesondere eine von außerhalb des Fahrzeugs zugängliche Klappe, bevorzugt ein Tankdeckel des Fahrzeugs, ist. Die Vorteile einer zumindest teilweisen Integration der Auftrennvorrichtung in ein Verschlusselement wurden oben bereits ausführlich dargelegt. Insbesondere kann durch ein Verschlusselement, das als eine Klappe des Fahrzeugs ausgebildet ist, eine Bedienung durch einen Benutzer des Fahrzeugs besonders einfach bereitgestellt werden. So muss der Benutzer lediglich die Klappe anheben beziehungsweise verschwenken, um den Sternpunkt der Drehstrommaschine aufzutrennen. Dies ist umso einfacher möglich, wenn die Klappe von außerhalb des Fahrzeugs zugänglich ist. Insbesondere in diesem Fall kann dabei die Klappe als ein Tankdeckel des Fahrzeugs ausgebildet sein. Ein besonders funktionsangepasstes Design kann dadurch bereitgestellt werden.

Gemäß einem dritten Aspekt der Erfindung wird die Aufgabe gelöst durch ein Verfahren zum Durchführen eines Ladevorgangs zwischen einem Elektrosystems eines Fahrzeugs gemäß dem zweiten Aspekt der Erfindung und einer externen Drehstromquelle. Ein erfindungsgemäßes Verfahren ist durch folgende Schritte gekennzeichnet:
a) Abstellen des Fahrzeugs,
b) Auftrennen eines Sternpunkts der Drehstrommaschine des Elektrosystems durch die Auftrennvorrichtung,
c) Anordnen eines Ladesteckers der externen Drehstromquelle am aufgetrennten Sternpunkt zum Herstellen einer elektrisch leitenden Verbindung zwischen den Maschinenleitern der Drehstrommaschine und den Ladeleitern des Ladesteckers,
d) Durchführen des Ladevorgangs,
e) Entfernen des Ladesteckers der externen Drehstromquelle vom aufgetrennten Sternpunkt, und
f) Schließen des Sternpunkts der Drehstrommaschine des Elektrosystems durch Aufheben der Auftrennung der Auftrennvorrichtung.

Ein erfindungsgemäßes Fahrzeug gemäß dem zweiten Aspekt der Erfindung weist dabei insbesondere eine Elektromaschine gemäß dem ersten Aspekt der Erfindung auf. Durch die Verwendung eines Elektrosystems gemäß dem ersten Aspekt der Erfindung und/oder durch eine Ausführung durch ein Fahrzeug gemäß dem zweiten Aspekt der Erfindung bringt ein erfindungsgemäßes Verfahren die gleichen Vorteile mit sich, wie sie ausführlich mit Bezug auf ein erfindungsgemäßes Elektrosystem gemäß dem ersten Aspekt der Erfindung beziehungsweise mit Bezug auf ein erfindungsgemäßes Fahrzeug gemäß dem zweiten Aspekt der Erfindung erläutert worden sind.

In einem ersten Schritt a) wird das Fahrzeug abgestellt. Dies ist notwendig, da der Ladevorgang an einer externen Drehstromquelle nur stationär und daher bei stehendem Fahrzeug durchgeführt werden kann.

In einem nächsten Schritt b) wird der Sternpunkt der Drehstrommaschine des Elektrosystems durch die Auftrennvorrichtung aufgetrennt. Dies kann beispielsweise bevorzugt durch Betätigung einer Verschlussvorrichtung, beispielsweise eines Tankdeckels des Fahrzeugs, vorgenommen werden. Durch das Auftrennen sind die einzelnen Maschinenleiter der Drehstrommaschine jeweils wechselseitig elektrisch voneinander getrennt. Darüber hinaus sind diese Maschinenleiter auch zugänglich.

Dies wird in Schritt c) des erfindungsgemäßen Verfahrens verwendet, in dem ein Ladestecker der externen Drehstromquelle am aufgetrennten Sternpunkt angeordnet wird. Insbesondere kann dafür bevorzugt eine Anordnungsvorrichtung der Auftrennvorrichtung vorgesehen sein. Wesentlich bei diesem Schritt des erfindungsgemäßen Verfahrens ist dabei, dass die Ladeleiter des Ladesteckers, wobei jede Phase des Drehstroms der Drehstromquelle bevorzugt in einem Ladeleiter geführt ist, jeweils mit einem Maschinenleitern der Drehstrommaschine derart verbunden werden, dass zwischen ihnen eine elektrische Verbindung hergestellt wird. Dadurch kann im folgenden Schritt d) der eigentliche Ladevorgang durchgeführt werden. Dabei wird ausgenutzt, dass bereits in einem normalen Fahrbetrieb der Stromrichter zum Umwandeln der Stromarten, also Drehstrom in Gleichstrom beziehungsweise Gleichstrom in Drehstrom, ausgebildet ist. Für diese Umwandlung spielt es keine Rolle, ob der Drehstrom, der im Stromrichter in Gleichstrom umgewandelt wird, wie im Fahrbetrieb von der Drehstrommaschine erzeugt wird, oder aus der externen Drehstromquelle in diese über den aufgetrennten Sternpunkt eingespeist wird. Dies gilt analog auch für Gleichstrom, der im Stromrichter in Drehstrom umgewandelt wird, da es unerheblich ist, ob der erzeugte Drehstrom in der Drehstrommaschine verbraucht wird oder ob er in ein Stromnetz der externen Drehstromquelle eigespeist wird. Durch die Verwendung der im Elektrosystem des Fahrzeugs bereits vorhandenen Bauelemente, insbesondere die Drehstrommaschine und den Stromrichter, kann ein derartiger Ladevorgang mit hoher Leistung vorgenommen werden. Dadurch kann beispielsweise eine nötige Ladezeit zum Aufladen der Gleichstrombatterie verkürzt werden. Auch sind zusätzliche Bauteile, wie Relais, Gleichrichter oder weitere Stromrichter, für die Durchführung des Ladevorgangs nicht notwendig. Dadurch können Herstellungskosten gesenkt und Nachteile bezüglich Gewicht und Bauraumbedarf vermieden werden.

Nach der Durchführung des Ladevorgangs wird in einem folgenden Schritt e) der Ladestecker der externen Drehstromquelle wieder vom aufgetrennten Sternpunkt entfernt. Eine elektrische Verbindung zwischen dem erfindungsgemäßen Elektrosystem des erfindungsgemäßen Fahrzeugs und der externen Drehstromquelle besteht ab diesem Zeitpunkt nicht mehr.

In einem letzten Schritt f) des erfindungsgemäßen Verfahrens wird der Sternpunkt der Drehstrommaschine wieder geschlossen. Dies wird durch Aufhebung der Trennung durch die Auftrennvorrichtung vorgenommen, als umgekehrter Vorgang zum in Schritt b) durchgeführten Auftrennen. Nach dem Schließen des Sternpunkts sind die Maschinenleiter der Drehstrommaschine wieder über diesen Sternpunkt elektrisch leitend verbunden. Ein erneuter Betrieb der Drehstrommaschine, beispielsweise zum Antreiben des Fahrzeugs, kann dann wieder vorgenommen werden.

Ferner kann bei einem erfindungsgemäßen Verfahren vorgesehen sein, dass beim Durchführen des Ladevorgangs in Schritt d) die Gleichstrombatterie geladen oder entladen wird. Beim Laden wird dem externen Drehstromnetz Strom entnommen und in der Gleichstrombatterie gespeichert. Diese gespeicherte Energie steht dann zu einem späteren Zeitpunkt für einen Betrieb der Drehstrommaschine, beispielsweise zum Antreiben des Fahrzeugs, wieder zur Verfügung. Alternativ kann bei einem Ladevorgang die Gleichstrombatterie auch entladen werden. In diesem Fall wird von der Gleichstrombatterie elektrische Energie über den Stromrichter und die Drehstrommaschine in das externe Drehstromnetz eingespeist. Eine Stützung dieses externen Drehstromnetzes kann dadurch erreicht werden.

Darüber hinaus kann ein erfindungsgemäßes Verfahren derart weiterentwickelt sein, dass beim Durchführen des Ladevorgangs in Schritt d) eine Welle der Drehstrommaschine blockiert wird. Durch das Durchleiten des Drehstroms durch die Drehstrommaschine während eines Ladevorgangs werden in der Drehstrommaschine magnetische und elektrische Felder erzeugt. Dadurch kann es zu Drehmomenten auf eine Welle der Drehstrommaschine kommen. Durch ein Blockieren dieser Welle können somit insbesondere Bewegungen dieser Welle sicher vermieden werden. Bevorzugt kann dabei eine Blockiervorrichtung vorgesehen sein, durch die eine Bewegung der Welle sicher vermieden wird. Insbesondere ein Antreiben und dadurch eine Bewegung des Fahrzeugs während eines Ladevorgangs kann dadurch verhindert werden.

Auch kann ein erfindungsgemäßes Verfahren dahingehend ausgebildet sein, dass zumindest beim Durchführen des Ladevorgangs in Schritt d) das Elektrosystem wenigstens abschnittsweise gekühlt wird. Bei einem Ladevorgang, insbesondere einem Ladevorgang mit hoher Ladeleistung, kann es im Elektrosystem zu Verlusten kommen, insbesondere beispielsweise in der Drehstrommaschine und/oder dem Stromrichter. Diese Verluste werden zumeist in Wärme umgewandelt. Um eine Beschädigung des Elektrosystems durch Überhitzung zu verhindern, kann es daher von Vorteil sein, das Elektrosystem zumindest abschnittsweise zu kühlen. Dafür kann insbesondere auch eine entsprechende Kühlvorrichtung vorgesehen sein. Bevorzugt kann insbesondere eine Kühlvorrichtung verwendet werden, die auch bei einem Fahrbetrieb des Fahrzeugs zum Kühlen des Elektrosystems vorgesehen ist. Zusätzliche Kühlvorrichtungen können so vermieden werden.

Besonders bevorzugt kann bei einem erfindungsgemäßen Verfahren vorgesehen sein, dass der Stromrichter des Elektrosystems eine Mehrzahl von Leistungshalbleiterschaltern aufweist, wobei beim Durchführen des Ladevorgangs in Schritt d) zumindest ein nicht benötigter Leistungshalbleiterschalter deaktiviert wird, bevorzugt alle nicht benötigten Leistungshalbleiterschalter, deaktiviert werden. Die elektrische Leistung, die von einem Leistungshalbleiterschalter verarbeitet werden kann, ist begrenzt. Durch das Vorsehen einer Mehrzahl von Leistungshalbleiterschaltern kann der Stromrichter bei einer insgesamt hohen elektrischen Leistung betrieben werden, da der zu verarbeitende Strom auf die einzelnen Leistungshalbleiterschalter aufgeteilt werden kann. Eine Höhe der maximal verarbeitbaren elektrischen Leistung hängt dabei von der Anzahl der vorhandenen Leistungshalbleiterschalter ab. Bei zu verarbeitbaren elektrischen Leistungen, die insbesondere deutlich niedriger sind als diese maximale Leistung, werden viele der vorhandenen Leistungshalbleiterschaler nicht benötigt und verursachen darüber hinaus unnötige Schaltverluste. Durch ein Deaktivieren dieser nicht benötigten Leistungshalbleiterschalter kann somit ein durch ein erfindungsgemäßes Verfahren bereitgestellter Ladevorgang nochmals verbessert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Elemente mit gleicher Funktion und Wirkungsweise sind in den einzelnen Figuren mit denselben Bezugszeichen versehen.

### Es zeigen schematisch:

- Fig. 1: drei mögliche Betriebsarten eines erfindungsgemäßen Elektrosystems,
- Fig. 2: ein erfindungsgemäßes Fahrzeug in einem Fahrbetrieb,
- Fig. 3: ein erfindungsgemäßes Fahrzeug bei einem Ladevorgang, und
- Fig. 4: eine Teilansicht eines Stromrichters.

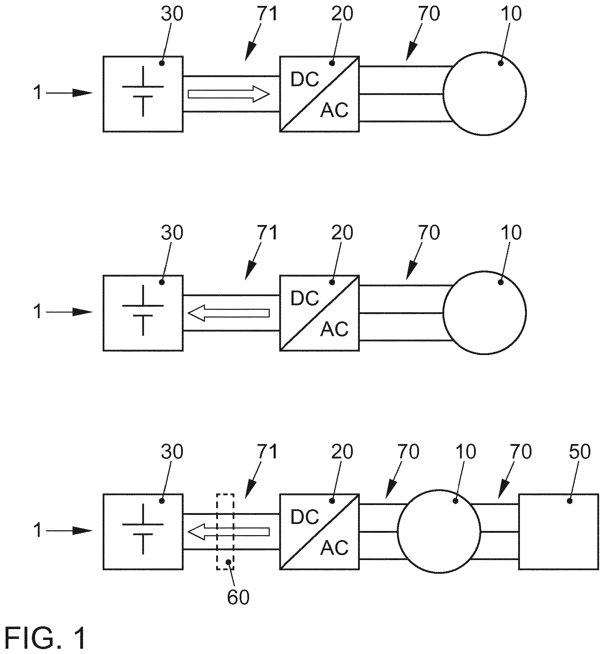

In Fig. 1 sind drei mögliche Betriebsarten eines erfindungsgemäßen Elektrosystems 1 gezeigt. Die Elektrosysteme 1 weisen dabei jeweils insbesondere eine Drehstrommaschine 10, einen Stromrichter 20 und eine Gleichstrombatterie 30 auf. Diese Bauteile der erfindungsgemäßen Elektromaschine 1 sind dabei elektrisch leitend miteinander verbunden, wobei der Stromrichter 20 zwischen der Gleichstrombatterie 30 und der Drehstrommaschine 10 angeordnet ist. Dadurch ist es ermöglicht, die Gleichstrombatterie 10 mit Gleichstrom 71, die Drehstrommaschine 10 mit Drehstrom 70 zu versorgen. Im Stromrichter 20 werden diese beiden Stromarten ineinander umgewandelt.

In der oberen Abbildung der Fig. 1 ist ein Betriebszustand abgebildet, in der die Drehstrommaschine 10 von der Gleichstrombatterie 30 mit Energie versorgt wird. Gleichstrom 71 der Gleichstrombatterie 30 fließt zum Stromrichter 20, wird von diesem in Drehstrom 71 umgewandelt und im Anschluss der Drehstrommaschine 10 zugeführt. Die Drehstrommaschine 10 wird in diesem Fall als Elektromotor betrieben. Bei einer in einem Fahrzeug 100 (nicht mit abgebildet) angeordneten Elektromaschine 1 entspricht dies einem Fahrbetrieb.

Die mittlere Abbildung hingegen zeigt einen Betriebszustand, der bei einem Elektrosystem 1 in einem Fahrzeug 100 einem Rekuperationsbetrieb entspricht. Hier liefert die Drehstrommaschine 10 Energie, indem sie beispielsweise aus mechanischer Energie Drehstrom 70 erzeugt. Durch einen Betrieb der Drehstrommaschine 10 als Generator kann diese Energieumwandlung ermöglicht werden. Dieser Drehstrom 70 wird wiederum im Stromrichter 20 in Gleichstrom 71 umgewandelt, der im Anschluss zum Laden der Gleichstrombatterie 30 verwendet wird.

In der unteren Abbildung ist ein Ladevorgang gezeigt, wie er durch ein erfindungsgemäßes Elektrosystem 1 ermöglicht werden kann. Eine externe Drehstromquelle 50 ist direkt an die Drehstrommaschine 10 angeschlossen. Dafür wurde ein Sternpunkt 11 (nicht mit abgebildet) der Drehstrommaschine 10 aufgetrennt und die Maschinenleiter U, V, W (nicht mit abgebildet) direkt elektrisch leitend mit Ladeleitern L1, L2, L3 (nicht mit abgebildet) verbunden. Der Drehstrom 70 der externen Drehstromquelle 50 wird durch die Drehstrommaschine 10 geleitet und analog zum in der mittleren Abbildung gezeigten Rekuperationsbetrieb im Stromrichter 20 in Gleichstrom 71 umgewandelt. Dieser Gleichstrom 71 kann dann zum Laden der Gleichstrombatterie 30 verwendet werden. Da insbesondere sämtliche wesentlichen Komponenten, die für diesen Ladevorgang der Gleichstrombatterie 30 benötigt werden, bereits im erfindungsgemäßen Elektrosystem 1 vorhanden sind, kann so dieser Ladevorgang besonders einfach und kostengünstig durchgeführt werden. Zusätzlich kann zwischen dem Stromrichter 20 und der Gleichstrombatterie 30 ein weiterer Gleichspannungswandler 60 angeordnet sein, der in Fig. 1 strichliert gezeigt ist. Durch einen derartigen Gleichspannungswandler 60 kann insbesondere eine Spannung des Gleichstroms verändert werden. Dies ermöglicht insbesondere eine Anpassung dieser Spannung an Anforderungen der Gleichstrombatterie 30, falls diese nicht direkt durch den Stromrichter 20 bei der Umwandlung des Drehstroms 70 der externen Drehstromquelle 50 bereitgestellt werden können.

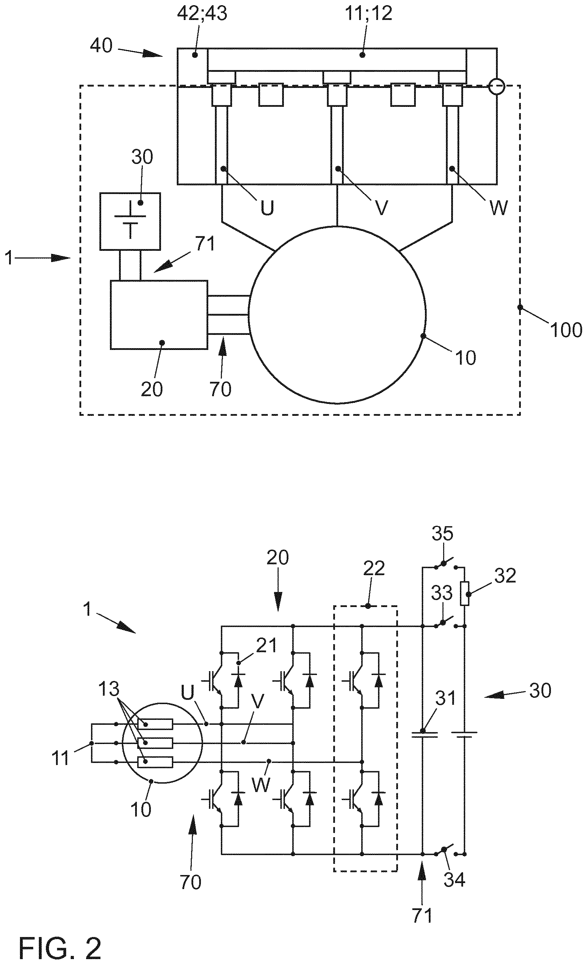

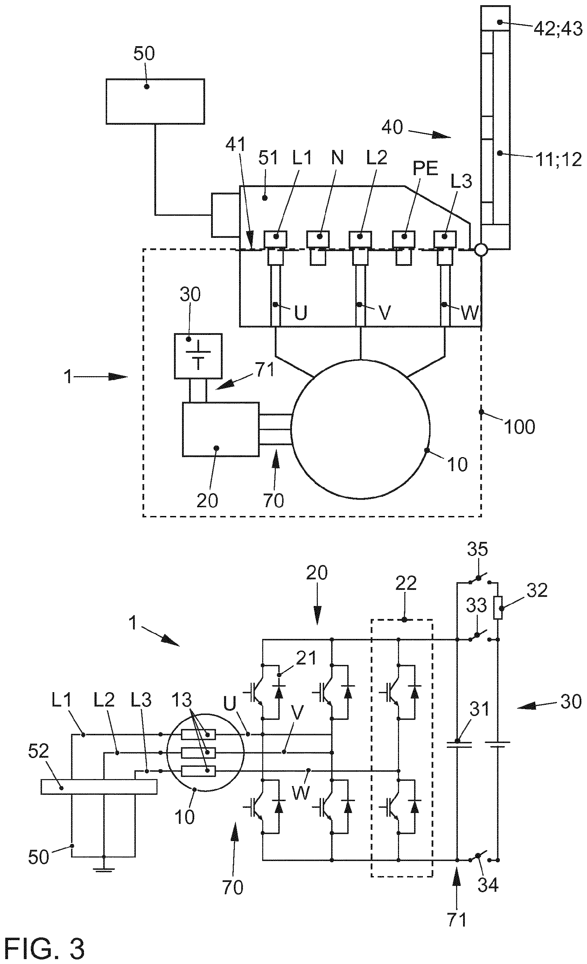

Die Fig. 2 und 3 zeigen jeweils eine Ausgestaltungsform eines erfindungsgemäßen Fahrzeugs 100, in Fig. 2 in einem Fahrbetrieb und in Fig. 3 bei einem Ladevorgang. Es ist jeweils eine schematische Darstellung des Fahrzeugs 100 und darunter ein entsprechendes schematisches elektrisches Schaltbild gezeigt. Dabei sind vom Fahrzeug 100 insbesondere die Anschlüsse des Elektrosystems 1 und die Auftrennvorrichtung 40 gezeigt, die beispielsweise als ein Tankdeckel ausgebildet sein kann. Im Folgenden werden beide Figuren zusammen beschrieben, wobei auf Gemeinsamkeiten und insbesondere auf Unterschiede besonders eingegangen wird.

Im erfindungsgemäßen Fahrzeug 100 ist jeweils ein erfindungsgemäßes Elektrosystem 1 angeordnet. Das Elektrosystem 1 weist eine Gleichstrombatterie 30, einen Stromrichter 20 und eine Drehstrommaschine 10 auf. Die Komponenten des Elektrosystems 1 sind dabei elektrisch leitend miteinander verbunden, wobei der Stromrichter 20 zwischen der Gleichstrombatterie 30 und der Drehstrommaschine 10 angeordnet ist. Dadurch kann die Gleichstrombatterie 30 mit Gleichstrom 71, die Drehstrommaschine 10 mit Drehstrom 70, insbesondere mit dreiphasigen Drehstrom 70, versorgt werden. Dafür weist der Stromrichter 20 Leistungshalbleiterschalter 21 auf, von denen in den Fig. 2, 3 jeweils einer mit einem Bezugszeichen versehen ist. Jeweils zwei der Leistungshalbleiterschalter 21 sind zu einer Halbbrücke 22 zusammengefasst, von denen ebenfalls jeweils eine gekennzeichnet ist. Die Leistungshalbleiterschalter 21 weisen dabei eine Spannungsklasse auf, die bevorzugt zusätzlich zum eigentlichen Betrieb des Elektrosystems 1 auch angepasst an eine externe Drehstromquelle 50 (abgebildet in Fig. 3) gewählt ist. Eine mögliche bevorzugte Spannungsklasse ist dabei 1200V. Jede der Halbbrücken 22 ist einem der Maschinenleiter U, V, W zugeordnet. Die Maschinenleiter U, V, W der Drehstrommaschine 10 sind zum Leiten jeweils einer der Phasen des Drehstroms 70 vorgesehen. Für jede Phase des Drehstroms 70 ist im Stromrichter 20 somit eine dieser Halbbrücken 22 zur Umwandlung dieser Phase des Drehstroms 70 in Gleichstrom 71 vorgesehen. Zusammen ermöglichen die Halbbrücken 22 die Umwandlung zwischen den beiden Stromarten Drehstrom 70 und Gleichstrom 71. Die Maschinenleiter U, V, W sind ferner aus dem Inneren der Drehstrommaschine 10 herausgeführt und in einem Sternpunkt 11 miteinander verbunden. In dieser Ausgestaltungsform ist der Sternpunkt 11 in einer Sternbrücke 12 angeordnet. Diese Sternbrüche 12 ist wiederum in einem Verschlusselement 42 einer Auftrennvorrichtung 40 angeordnet, welche als Klappe 43 ausgebildet ist.

Bei geschlossener Klappe 43 ist der Sternpunkt 11 geschlossen und ein Betrieb des erfindungsgemäßen Fahrzeugs 100, sowohl hinsichtlich eines Fahrbetriebs als auch hinsichtlich eines Rekuperationsbetriebs, ist ermöglicht. Dies ist in Fig. 2 gezeigt. Bei beispielsweise einem Fahrbetrieb sind die beiden Schütze 33, 34 der Gleichstrombatterie 30 geschlossen (nicht mit abgebildet), Gleichstrom 71 fließt in den Stromrichter 20 und wird in diesem durch die Leistungshalbleiterschalter 21 in Wechselstrom 70 umgewandelt. Im Drehstrommotor 10 werden durch den Drehstrom 70 in den Spulen 13 Magnetfelder erzeugt, wodurch eine Drehbewegung einer Welle des Drehstrommotors 10 hervorgerufen wird. Auf diese Weise kann ein Antrieb für das Fahrzeug 100 bereitgestellt werden. Bei einem Rekuperationsbetrieb hingegen wird mechanische Energie der Welle im Drehstrommotor 10 auf umgekehrt analoge Weise in Drehstrom 70 umgewandelt, dieser im Stromrichter 20 in Gleichstrom 71 gewandelt, und mit diesem Gleichstrom 71 die Gleichstrombatterie 30 aufgeladen.

In Fig. 3 ist ein erfindungsgemäßes Fahrzeug 10 gezeigt, dessen Fahrt gemäß Schritt a) eines erfindungsgemäßen Verfahrens beendet ist. Ferner wurden ebenfalls bereits die Schritte b) und c) eines erfindungsgemäßen Verfahrens durchgeführt, durch die Auftrennvorrichtung 40 wurde der Sternpunkt 11 der Drehstrommaschine 10 aufgetrennt und ein Ladestecker 51 einer externen Drehstromquelle 50 wurde an der Anordnungsvorrichtung 41 der Auftrennvorrichtung 40 angeordnet. Die Auftrennung des Sternpunkts 11 ist in der dargestellten Ausgestaltungsform eines erfindungsgemäßen Fahrzeugs 100 durch ein einfaches Öffnen der Klappe 43 als Teil des Verschlusselements 42 möglich. Dabei ist auch abgebildet, dass diese Klappe 43 von außerhalb des Fahrzeugs 100 zugänglich ist. Bevorzugt kann diese Klappe 43 beispielsweise als ein Tankdeckel ausgebildet sein. Die Maschinenleiter U, V, W sind durch die Auftrennung des Sternpunkts 11 nicht mehr elektrisch leitend miteinander verbunden. Dadurch ist es jedoch möglich, ebenfalls gemäß Schritt c) eines erfindungsgemäßen Verfahrens, jeweils einen der Netzanschlüsse, gebildet durch je einen Ladeleiter L1, L2, L3 der externen Drehstromquelle 50, mit einem der Maschinenleiter U, V, W elektrisch leitend zu verbinden. Bevorzugt kann dies beispielsweise durch eine Anpassung der Anordnungsvorrichtung 41 an den Ladestecker 51 sichergestellt werden. Im Schaltbild der Fig. 3 ist deutlich zu sehen, dass dadurch jeweils eine Phase der externen Drehstromquelle 50 mit einer Phase der Drehstrommaschine 10 direkt elektrisch leitend verbunden ist. Ein Schutzkontakt PE und ein Nullleiter N der Drehstromquelle 50 werden ebenfalls mit entsprechenden Kontakten der Elektromaschine 1 leitend verbunden. Ferner kann die externe Drehstromquelle 50 auch einen Schutzschalter 52 aufweisen, um eine Sicherheit für einen Benutzer der gesamten Anordnung zu steigern.

Für den eigentlichen Ladevorgang in Schritt d) wird bevorzugt eine Welle der Drehstrommaschine 10 blockiert, um ein ungewolltes Antreiben des Fahrzeugs 100 während des Ladevorgangs zu verhindern. Als weitere Vorbereitung wird ein Kondensator 31 über einen entsprechend zugeschalteten Widerstand 32 auf eine Betriebsspannung der Gleichstrombatterie 30 vorgeladen. Dieses Vorladen des Kondensators 31 wird dabei insbesondere durch ein Schließen des Vorladeschützes 35 abgesichert. Für den eigentlichen Ladevorgang werden der Plus-Schütz 33 und der Plus-Schütz 34 geschlossen und der Ladestecker 51 an der Auftrennvorrichtung 40 angeordnet. Dadurch werden die oben beschriebenen elektrischen Verbindungen hergestellt. Drehstrom 71 fließt aus der externen Drehstromquelle 50 über die Spulen 13 der Drehstrommaschine 10 zum Stromrichter 20. Dieser wird in diesem Fall als Gleichrichter betrieben und wandelt durch seine Leistungshalbleiterschalter 21 den Drehstrom 70 in Gleichstrom 71 um. Da dabei insbesondere in der Drehstrommaschine 10 und/oder dem Stromrichter 20 Verluste entstehen können, die insbesondere in Wärme umgewandelt werden, können bevorzugt zumindest diese Elemente eines erfindungsgemäßen Elektrosystems 1 während des Ladevorgangs gekühlt werden. Durch den im Stromrichter 20 erzeugten Gleichstrom 71 kann wiederum die Gleichstrombatterie 30 aufgeladen werden. Dabei kann dieser Vorgang auch in umgekehrter Reihenfolge erfolgen, so dass ein Netz einer externen Drehstromquelle 50 auch durch Gleichstrom 71 einer Gleichstrombatterie 30 eines erfindungsgemäßen Fahrzeugs 100 gestützt werden kann. Nach Abschluss eines Ladevorgangs wird dann in einem Schritt e) der Ladestecker 51 wieder von der Auftrennvorrichtung 40 entfernt und durch Schließen der Klappe 43 der Sternpunkt 11 der Drehstrommaschine 10 wieder geschlossen. Damit ist der Zustand, der in Fig. 2 gezeigt ist, wieder hergestellt.

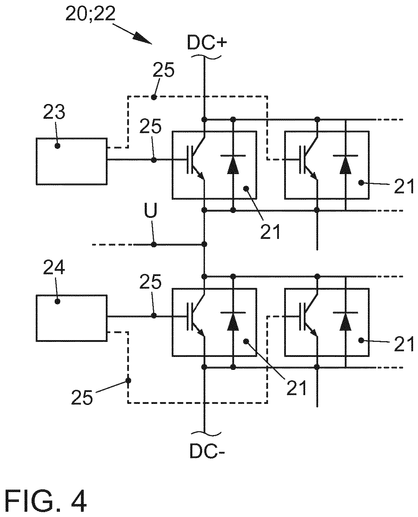

Bevorzugt weist ein Stromrichter 20 eines erfindungsgemäßen Elektrosystems 1 in seinen Halbbrücken 22 jeweils mehrere Paare von Leistungshalbleiterschaltern 21 auf. Dies ist in Fig. 4 beispielhaft für eine Halbbrücke 22 gezeigt, die dem Maschinenleiter U zugeordnet ist. Dies hat den Vorteil, dass hohe elektrische Leistungen durch den Stromrichter 20 durch eine Verteilung der Leistung auf die einzelnen Paare an Leistungshalbleiterschaltern 21 verarbeitet werden können, ohne dass eine Beschädigung oder gar Zerstörung der einzelnen Leistungshalbleiterschalter 21 befürchtet werden muss. Hohe elektrische Leistungen treten dabei insbesondere bei einem Fahrbetrieb und/oder einem Rekuperationsbetrieb eines erfindungsgemäßen Fahrzeugs 100 (nicht mit abgebildet) auf. Bei niedrigeren elektrischen Leistungen, wie sie beispielsweise bei einem Ladevorgang auftreten können, werden jedoch nicht alle dieser Paare an Leistungshalbleiterschaltern 21 einer Halbbrücke 22 benötigt. Durch eine Deaktivierung der nicht benötigten Paare an Leistungshalbleiterschaltern 21 einer Halbbrücke 22, kontrolliert über einen Oberschalter-Treiber 23 und einem Unterschalter-Treiber 24, die jeweils mit einer Kontrollleitung 25 mit den entsprechenden Leistungshalbleiterschaltern 21 verbunden sind, kann dies bereitgestellt werden. In der abgebildeten Halbbrücke 22 ist dabei beispielsweise das erste Paar der Leistungshalbleiterschalter 21 aktiviert, dargestellt durch eine durchgezogene Kontrollleitung 25. Das zweite Paar an Leistungshalbleiterschaltern 21 ist deaktiviert, dargestellt durch eine gestrichelte Kontrollleitung 25. Eine Verringerung der Verluste, insbesondere durch eine Verminderung von Schaltverlusten, kann durch eine derartige bedarfsgerechte Aktivierung beziehungsweise Deaktivierung der Paare an Leistungshalbleiterschaltern 21 erreicht werden. Insgesamt kann dadurch die Leistungsfähigkeit eines erfindungsgemäßen Elektrosystems 1, insbesondere bei Ladevorgängen, nochmals gesteigert werden.

### Bezugszeichenliste

- 1: Elektrosystem

- 10: Drehstrommaschine
- 11: Sternpunkt
- 12: Stern brücke
- 13: Spule

- 20: Stromrichter
- 21: Leistungshalbleiterschalter
- 22: Halbbrücke
- 23: Oberschalter-Treiber
- 24: Unterschalter-Treiber
- 25: Kontrollleitung

- 30: Gleichstrombatterie
- 31: Kondensator
- 32: Widerstand
- 33: Plus-Schütz
- 34: Minus-Schütz
- 35: Vorladeschütz

- 40: Auftrennvorrichtung
- 41: Anordnungsvorrichtung
- 42: Verschlusselement
- 43: Klappe

- 50: Drehstromquelle
- 51: Ladestecker
- 52: Schutzschalter

- 60: Gleichspannungswandler

- 70: Drehstrom
- 71: Gleichstrom

- 100: Fahrzeug

- L1, L2, L3: Ladeleiter
- N: Nullleiter
- PE: Schutzkontakt
- U, V, W: Maschinenleiter

## Patentansprüche

1. Fahrzeug (100) mit einem Elektrosystem (1), aufweisend eine Drehstrommaschine (10), einen Stromrichter (20) und eine Gleichstrombatterie (30), wobei die Drehstrommaschine (10) über den Stromrichter (20) mit der Gleichstrombatterie (30) elektrisch leitend verbunden ist, wobei die Drehstrommaschine (10) mit Drehstrom (70) betreibbar ist und einen elektrischen Sternpunkt (11) und Maschinenleiter (U, V, W) für die einzelnen Phasen des Drehstroms (70) aufweist, wobei im Sternpunkt (11) die Maschinenleiter (U, V, W) zusammengeführt sind, wobei ferner die Gleichstrombatterie
(30) Gleichstrom (71) speichert und abgibt und wobei der Stromrichter (20) eine elektrische Umwandlung zwischen den Stromarten vornimmt,
wobei die Drehstrommaschine (10) eine Auftrennvorrichtung (40) zum Auftrennen des Sternpunkts (11) aufweist, wobei bei aufgetrenntem Sternpunkt (11) die einzelnen Maschinenleiter (U, V, W) voneinander elektrisch getrennt sind und wobei die Auftrennvorrichtung (40) ferner eine Anordnungsvorrichtung (41) zum Anordnen von Ladeleitern (L1, L2, L3) eines Ladesteckers (51) einer externen Drehstromquelle (50) in elektrisch leitender Verbindung zu den Maschinenleitern (U, V, W) der Drehstrommaschine (10) aufweist, wobei die Auftrennvorrichtung (40) zumindest teilweise in ein Verschlusselement (42) derart integriert ist, dass der Sternpunkt (11) der Drehstrommaschine (10) bei geschlossenem Verschlusselement (42) geschlossen ist und bei geöffnetem oder entferntem Verschlusselement (42) aufgetrennt ist, **dadurch gekennzeichnet,**
**dass** der Sternpunkt (11) in einer Sternbrücke enthalten ist, die im Verschlusselement (42) angeordnet ist, wobei das Verschlusselement (42) eine von außerhalb des Fahrzeugs (100) zugängliche Klappe (43), ein Tankdeckel des Fahrzeugs (100), ist.

2. Fahrzeug (100) nach Anspruch 1,
**dadurch gekennzeichnet,**
**dass** in der elektrisch leitenden Verbindung zwischen dem Stromrichter (20) und der Gleichstrombatterie (30) ein Gleichspannungswandler (60) angeordnet ist.

3. Fahrzeug (100) nach Anspruch 1 oder 2,
**dadurch gekennzeichnet,**
**dass** der Stromrichter (20) Leistungshalbleiterschalter (21) für die Umwandlung zwischen den Stromarten aufweist, wobei eine Spannungsklasse der Leistungshalbleiterschalter (21) zumindest der externen Drehstromquelle (50) angepasst gewählt ist, insbesondere größer als 1000V, bevorzugt 1200V, gewählt ist.

4. Verfahren zum Durchführen eines Ladevorgangs zwischen einem Elektrosystems (1) eines Fahrzeugs (100) nach Anspruch 1 und einer externen Drehstromquelle (50),
**umfassend die folgende Schritte:**
a) Abstellen des Fahrzeugs (100),
b) Auftrennen eines Sternpunkts (11) der Drehstrommaschine (10) des Elektrosystems (1) durch die Auftrennvorrichtung (40),
c) Anordnen eines Ladesteckers (51) der externen Drehstromquelle (50) am aufgetrennten Sternpunkt (11) zum Herstellen einer elektrisch leitenden Verbindung zwischen den Maschinenleitern (U, V, W) der Drehstrommaschine (10) und den Ladeleitern (L1, L2, L3) des Ladesteckers (51),
d) Durchführen des Ladevorgangs,
e) Entfernen des Ladesteckers (51) der externen Drehstromquelle (50) vom aufgetrennten Sternpunkt (11), und
f) Schließen des Sternpunkts (11) der Drehstrommaschine (10) des Elektrosystems (1) durch Aufheben der Auftrennung der Auftrennvorrichtung (40).

5. Verfahren nach Anspruch 4,
**dadurch gekennzeichnet,**
**dass** beim Durchführen des Ladevorgangs in Schritt d) die Gleichstrombatterie (30) geladen oder entladen wird.

6. Verfahren nach Anspruch 4 oder 5,
**dadurch gekennzeichnet,**
**dass** beim Durchführen des Ladevorgangs in Schritt d) eine Welle der Drehstrommaschine (10) blockiert wird.

7. Verfahren nach einem der Ansprüche 4 bis 6,
**dadurch gekennzeichnet,**
**dass** zumindest beim Durchführen des Ladevorgangs in Schritt d) das Elektrosystem (1) wenigstens abschnittsweise gekühlt wird.

8. Verfahren nach einem der Ansprüche 4 bis 7,
**dadurch gekennzeichnet,**
**dass** der Stromrichter (20) des Elektrosystems (1) eine Mehrzahl von Leistungshalbleiterschaltern (21) aufweist, wobei beim Durchführen des Ladevorgangs in Schritt d) zumindest ein nicht benötigter Leistungshalbleiterschalter (21) deaktiviert wird, bevorzugt alle nicht benötigten Leistungshalbleiterschalter (21), deaktiviert werden.

## Claims

1. Vehicle (100) having an electrical system (1), comprising a three-phase machine (10), a converter (20) and a DC battery (30), wherein the three-phase machine (10) is electrically conductively connected to the DC battery (30) via the converter (20), wherein the three-phase machine (10) is able to be operated with a three-phase current (70) and has an electrical star point (11) and machine conductors (U, V, W) for the individual phases of the three-phase current (70), wherein the machine conductors (U, V, W) are joined together at the star point (11), wherein the DC battery (30) furthermore stores and emits direct current (71) and wherein the converter (20) carries out an electrical conversion between the current types, wherein the three-phase machine (10) comprises a disconnecting device (40) for disconnecting the star point (11), wherein the individual machine conductors (U, V, W) are electrically isolated from one another when the star point (11) is disconnected, and wherein the disconnecting device (40) furthermore comprises an arrangement device (41) for arranging charging conductors (L1, L2, L3) of a charging plug (51) of an external three-phase current source (50) in a manner electrically conductively connected to the machine conductors (U, V, W) of the three-phase machine (10), wherein the disconnecting device (40) is at least partly integrated into a closure element (42) in such a way that the star point (11) of the three-phase machine (10) is closed when the closure element (42) is closed, and is disconnected when the closure element (42) is opened or removed,
**characterized**
**in that** the star point (11) is contained in a star bridge arranged in the closure element (42), wherein the closure element (42) is a flap (43) accessible from outside the vehicle (100), a filler cap of the vehicle (100).

2. Vehicle (100) according to Claim 1,
**characterized**
**in that** a DC-DC converter (60) is arranged in the electrically conductive connection between the converter (20) and the DC battery (30).

3. Vehicle (100) according to Claim 1 or 2,
**characterized**
**in that** the converter (20) comprises power semiconductor switches (21) for the conversion between the current types, wherein a voltage class of the power semiconductor switches (21) is chosen in a manner adapted at least to the external three-phase current source (50), in particular is chosen to be greater than 1000 V, preferably 1200 V.

4. Method for carrying out a charging process between an electrical system (1) of a vehicle (100) according to Claim 1 and an external three-phase current source (50),
**comprising the following steps:**
a) parking the vehicle (100),
b) disconnecting a star point (11) of the three-phase machine (10) of the electrical system (1) by means of the disconnecting device (40),
c) arranging a charging plug (51) of the external three-phase current source (50) at the disconnected star point (11) in order to establish an electrically conductive connection between the machine conductors (U, V, W) of the three-phase machine (10) and the charging conductors (L1, L2, L3) of the charging plug (51),
d) carrying out the charging process,
e) removing the charging plug (51) of the external three-phase current source (50) from the disconnected star point (11), and
f) closing the star point (11) of the three-phase machine (10) of the electrical system (1) by cancelling the disconnection of the disconnecting device (40).

5. Method according to Claim 4,
**characterized**
**in that** when carrying out the charging process in step d), the DC battery (30) is charged or discharged.

6. Method according to Claim 4 or 5,
**characterized**
**in that** when carrying out the charging process in step d), a shaft of the three-phase machine (10) is blocked.

7. Method according to any of Claims 4 to 6,
**characterized**
**in that** at least when carrying out the charging process in step d), the electrical system (1) is cooled at least in sections.

8. Method according to any of Claims 4 to 7,
**characterized**
**in that** the converter (20) of the electrical system (1) comprises a plurality of power semiconductor switches (21), wherein when carrying out the charging process in step d), at least one power semiconductor switch (21) which is not required is deactivated, preferably all of the power semiconductor switches (21) that are not required are deactivated.

## Revendications

1. Véhicule (100) doté d'un système électrique (1) présentant une machine (10) à courants tournants, un redresseur de courant (20) et une batterie (30) à courant continu,
la machine (10) à courants tournants étant raccordée de manière électriquement conductrice à la batterie (30) à courant continu par l'intermédiaire du redresseur de courant (20),
la machine (10) à courants tournants pouvant être alimentée en courant tournant (70) et présentant un point d'étoile électrique (11) et des conducteurs machine (U, V, W) pour les différentes phases du courant tournant (70),
les conducteurs machine (U, V, W) étant réunis au point d'étoile (11),
la batterie (30) à courant continu accumulant et délivrant du courant continu (71) et le redresseur de courant (20) assurant une conversion électrique entre les types de courant,
la machine (10) à courants tournants présentant un ensemble de séparation (40) qui isole le point d'étoile (11),
les conducteurs machine (U, V, W) étant isolés électriquement les uns des autres lorsque le point d'étoile (11) est isolé et
l'ensemble de séparation (40) présentant en outre un ensemble d'agencement (41) qui agence les conducteurs de charge (L1, L2, L3) d'une fiche de charge (51) d'une source externe de courant (50) en liaison électriquement conductrice avec les conducteurs machine (U, V, W) de la machine (10) à courants tournants,
l'ensemble de séparation (40) étant intégré au moins en partie dans un élément de fermeture (42) de telle sorte que le point d'étoile (11) de la machine (10) à courants tournants soit fermé lorsque l'élément de fermeture (42) est fermé et soit isolé lorsque l'élément de fermeture (42) est ouvert ou enlevé, **caractérisé en ce que**
le point d'étoile (11) est inclus dans un pont en étoile disposé dans l'élément de fermeture (42) et
**en ce que** l'élément de fermeture (42) est un clapet (43) accessible de l'extérieur du véhicule (100), à savoir un couvercle du réservoir du véhicule (100).

2. Véhicule (100) selon la revendication 1, **caractérisé en ce qu'**un convertisseur (60) de courant continu est disposé dans la liaison électriquement conductrice entre le redresseur de courant (20) et la batterie (30) à courant continu.

3. Véhicule (100) selon la revendication 1 ou 2, **caractérisé en ce que** le redresseur de courant (20) présente des commutateurs de puissance semi-conducteurs (21) assurant le conversion entre les types de courant, la classe de tension sélectionnée pour les commutateurs de puissance semi-conducteurs (21) étant adaptée au moins à la source externe de courant (50), notamment supérieure à 1000 V et de préférence de 1200 V.

4. Procédé pour réaliser une opération de charge entre le système électrique (1) d'un véhicule (100) selon la revendication 1 et une source externe de courant (50), le procédé comprenant les étapes suivantes :
a) mise à l'arrêt du véhicule (100),
b) séparation d'un point d'étoile (11) de la machine (10) à courants tournants du système électrique (1) par l'ensemble de séparation (40),
c) agencement d'une fiche de charge (51) de la source externe de courant (50) sur le point d'étoile (11) isolé de manière à établir une liaison électriquement conductrice entre les conducteurs machine (U, V, W) de la machine (10) à courants tournants et les conducteurs de charge (L1, L2, L3) de la fiche de charge (51),
d) réalisation de l'opération de charge,
e) enlèvement de la fiche de charge (51) de la source externe de courant (50) du point d'étoile (11),
f) fermeture du point d'étoile (11) de la machine (10) à courants tournants du système électrique (1) par suppression de la séparation par l'ensemble de séparation (40) .

5. Procédé selon la revendication 4, **caractérisé en ce que** la batterie (30) à courant continu est chargée ou déchargée lors de la réalisation de l'opération de charge de l'étape d).

6. Procédé selon la revendication 4 ou 5, **caractérisé en ce que** l'arbre de la machine (10) à courants tournants est bloqué lors de la réalisation de l'opération de charge de l'étape d).

7. Procédé selon l'une des revendications 4 à 6, **caractérisé en ce que** le système électrique (1) est refroidi au moins lors de la réalisation de l'opération de charge de l'étape d).

8. Procédé selon l'une des revendications 4 à 7, **caractérisé en ce que** le redresseur de courant (20) du système électrique (1) présente plusieurs commutateurs de puissance semi-conducteurs (21) et **en ce que** lors de la réalisation de l'opération de charge de l'étape d), au moins un commutateur de puissance semi-conducteur (21) non utilisé est désactivé et de préférence tous les commutateurs de puissance semi-conducteurs (21) non utilisés sont désactivés.
